# EUROPEAN PATENT APPLICATION

(11) **EP 4 756 713 A1**
(43) Date of publication of application: **10.06.2026**
(21) Application number: 24217865.5
(22) Date of filing: 05.12.2024
(51) Int. Cl.: G06T 7/207

(54) **METHOD AND ELECTRONIC CIRCUIT FOR OPTICAL MOTION SENSING**

(71) Applicant: EM Microelectronic-Marin SA, 2074 Marin (CH)
(72) Inventor: PIEROBON, Lorenzo, 2000 Neuchâtel (CH)
(74) Representative: ICB SA

(57) **Abstract**

The present invention concerns an electronic circuit (10) for an optical motion sensing device (1), the electronic circuit comprising (10):
- a processor (18) and a storage (16),
- an image acquisition unit (11) configured to store a reference image (12) and a current image (13) to be compared with the reference image (12),
- a correlation engine (14) connected to the image acquisition unit (11) and configured to determine a correlation coefficient between the reference image (12) and the current image (13) for each one of numerous displacements between the reference image (12) and the current image (13),
- a search engine (15) connected to the correlation engine (14) and operable to compare the correlation coefficient of each displacement between the reference image (12) and the current image (13) with a predefined threshold correlation coefficient,
- wherein the search engine (15) is operable in one of a preliminary search mode and an accurate search mode, wherein when in the accurate search mode, the search engine (15) is configured to store the correlation coefficient obtained from the correlation engine in the storage (16).

## Description

### Field of the invention

The present invention relates to the field of optical motion sensing, e.g., to be conducted with optical motion sensing devices, which may be usable for controlling the position of a cursor on a screen. Such optical motion sensing devices may be implemented as an optical computer mouse.

In further aspects the present invention relates to an electronic circuit for an optical motion sensing device and to a method of optical motion sensing, e.g., to be conducted with such an electronic circuit.

In a further aspect the present invention relates to a computer program, e.g., in form of a computer readable storage medium to conduct optical motion sensing with an electronic circuit.

### Background of the invention

in the field of optical motion sensing, e.g. to be conducted with optical motion sensing devices, it is known to illuminate a surface and to move and optical motion sensing device across the illuminated surface. The optical motion sensing devices typically configured to capture a sequence of two-dimensional images of the surface which are to be compared to obtain or to derive a motion of the optical motion sensing device relative to the surface.

By way of example document US 11, 934, 598 B2 discloses a displacement detection circuit configured to implement a displacement detection method for appointing device having at least one pixel array.

With known optical sensing devices the optical sensor periodically takes snapshots of a surface and stores them. A current or actual snapshot is then typically compared with a previously captured snapshot, also denoted as a reference snapshot. The optical sensing device is typically configured to detect a displacement only within a given boundary. Such boundaries represent the maximum displacement in either transverse direction x and y that the displacement sensor can detect.

For obtaining a displacement information between the current snapshot and the reference snapshot there is applied a transverse offset along any one of the transverse direction x and y, and each pixel of the current snapshot is compared with a counterpart pixel of the reference snapshot. In case that a pixel of the current snapshot is identical or highly similar to a counterpart pixel of the reference snapshot a correlation counter or correlation coefficient may be increased by a predefined step. In case that a pixel of a current snapshot is unequal to a counterpart pixel of the reference snapshot, the correlation counter or correlation coefficient is left unchanged or may be even decreased.

In effect, the size of the correlation counter or correlation coefficient obtained for each transverse offset between the current snapshot and the reference snapshot is a direct indication of the spatial overlap or matching between the reference snapshot and the current snapshot for the given transverse offset.

Hence, the transverse displacement between the current snapshot and the reference snapshot that leads to a maximum correlation counter of all transverse displacements may represent spatial displacement of the optical motion sensing device relative to the surface and the time interval between those points of time, where the reference snapshot and the current snapshot have been acquired.

For obtaining the maximum correlation counter or correlation coefficient there has to be conducted a pixel-wise two-dimensional correlation between the reference snapshot and the current snapshot. The correlation coefficient thus obtained then has to be stored in a storage. Thereafter, the displacement between the reference snapshot and the current snapshot is modified and another correlation counter or correlation coefficient has to be derived for this varied transverse displacement between the snapshots. This process has to be repeatedly conducted until all offsets within the displacement boundary have been evaluated.

The transverse offset or displacement between the reference snapshot and the current snapshot that leads to the highest correlation coefficient represents the displacement that is ultimately reported by the optical motion sensing device. In other words, the process of optical motion sensing is based on searching for an offset that leads to a maximum correlation coefficient between the snapshots.

Optical motion sensing devices known in the prior art have the following deficiencies. The process to calculate the displacement is completed only when all correlation coefficients inside the displacement boundary have been calculated and evaluated. This presents a cost in terms of power consumption and time required to complete the process.

Moreover, the correlation coefficients have to be stored in a storage. This has a cost in terms of area occupation, because on-chip memory needs to be large enough to store all correlation coefficients. In addition, the storage of a comparatively large amount of data is disadvantageous in terms of power consumption to write the correlation coefficients in the storage.

It is therefore an aim of the present invention to provide improvements for optical motion sensing devices, which offer a rather fast, precise and efficient motion detection on the basis of image acquisition. It is a particular aim to reduce costs and required digital storage and to reduce calculation effort and time to derive a spatial displacement between a sequence of captured images. It is a further aim to reduce power consumption of such optical motion sensing devices.

### Summary of the invention

In one aspect the present invention relates to an electronic circuit for an optical motion sensing device. The electronic circuit comprises a processor and a storage. The electronic circuit further comprises an image acquisition unit, which is configured to store a reference image and a current image to be compared with the reference image. The reference image and the current image are sequentially captured by an imaging unit, e.g. by an optical sensor. The optical sensor and the image acquisitions unit are configured to capture a sequence of two-dimensional images. For detecting or sensing a motion of the optical motion sensor device relative to a reference surface, a sequence of captured pictures of the surface are mutually compared. The comparison of the sequence may comprise a pairwise comparison. Hence, a recently captured image, i.e., the current image is compared with a reference image, i.e. an image, that has been captured immediately before.

The electronic circuit further comprises a correlation engine. The correlation engine is connected to the image acquisition unit and is configured to determine a correlation coefficient between the reference image and the current image for each one of numerous displacements between the reference image and the current image. Accordingly, the current image and the reference image, which are both stored in the image acquisition unit, are mutually compared by applying a displacement between the reference image and the current image. For each displacement there will be conducted a pairwise and/or pixelwise comparison of pixels of the current image with corresponding pixels of the reference image. In case that a pixel of the current image is identical or highly similar to the corresponding pixel of the reference image, the correlation coefficient is increased or a respective correlation counter is increased. With a non-matching between a pixel of the current image and a pixel of the reference image the correlation coefficient is either decreased or left unchanged.

In this way and when comparing each pixel of the current image with a corresponding pixel of the reference image the size or magnitude of the correlation coefficient is directly indicative about a geometrical overlapping of the current image displaced by a well-defined displacement in the transverse plane relative to the reference image.

For each displacement in a first and/or a second transverse direction (x, y) there will be derived a correlation coefficient.

The electronic circuit further comprises a search engine, which is connected to the correlation engine. The search engine is operable to compare the correlation coefficient of the displacement between the reference image and the current image with a predefined threshold correlation coefficient.

Moreover, search engine is operable in one of a preliminary search mode and an accurate search mode. When in the accurate search mode, the search engine is configured to store the correlation coefficient obtained from the correlation engine in the storage. When in the preliminary search mode, the search engine may be operable to refrain from storing the correlation coefficient and/or to even disable storage of the correlation coefficient obtained from the correlation engine in the storage.

In this way, storage space can be saved and/or electrical energy required for erasing data and/or for conducting a write operation in the electronic storage can be saved.

The predefined threshold correlation coefficient is typically selected or determined such, that only displacements between the current image and the reference image that relate to a correlation coefficient that is larger than or equal to the predefined threshold correlation coefficient become candidates to reflect a real displacement between the reference image and the current image.

According to a further example the search engine is only and exclusively configured to store the correlation coefficient obtained from the correlation engine in the storage when in the accurate search mode. As long as the search engine is in the preliminary search mode it is effectively inoperable to store correlation coefficients obtained from the correlation engine in the storage. Such correlation coefficients may be simply discarded.

It may be also provided that the search engine is operable to exclusively store correlation coefficients that are larger than the predefined threshold correlation coefficient.

According to another example the switching of the search engine from the preliminary search mode into the accurate search mode may be triggered by a first or initial detection of the correlation coefficient being larger than or equal the predefined threshold correlation coefficient.

Nonetheless and by operating the search engine in the preliminary search mode there is no need and no intention for storing any correlation coefficients. In this way, the storage capacity of the storage can be reduced and a storage comprising a comparatively small capacity may be sufficient for implementing the electronic circuit for the optical motion sensing device.

According to another example and when in the preliminary search mode the search engine is inoperable to store the correlation coefficient obtained from the correlation engine in the storage. Here and as long as the search engine is and remains in the preliminary search mode the correlation coefficient derived by the correlation engine and provided to the search engine may be discarded. In this way, there is no necessity to store a vast amount of correlation coefficients in the storage. Storage space as well as energy for conducting respective storage operations can be saved.

According to a further example the search engine is in the preliminary search mode per default. It may switch into the accurate search mode when or before starting to correlate and/or to compare the current image with a reference image. When starting to compare or to correlate the current image with a previously captured image, i.e., with the reference image, the search engine starts in the preliminary search mode. Switching from the preliminary search mode into the accurate search mode may be triggered by a well-defined event. In this way, and per default the correlation corporations obtained from the correlation engine and transmitted to the search engine may be discarded, specifically when the correlation coefficients initially provided by the correlation engine and forwarded to the search engine are smaller than the predefined threshold correlation coefficient.

The search engine may be switchable from the preliminary search mode into the accurate search mode. When and once being in the accurate search around the search engine may remain in the accurate search mode irrespective of whether correlation coefficients generated or provided by the correlation engine are larger, equal to or smaller than the predefined threshold correlation coefficient. Moreover and when switching from the preliminary search mode into the accurate search mode the correlation engine may be controlled to conduct one or numerous well-defined displacements between the current image and the reference image to provide further and rather specific correlation coefficients being representative of a well-defined displacement between the current image and the reference image.

According to a further example the search engine is switchable from the preliminary search mode into the accurate search mode in response to a detection of a trigger correlation coefficient, which is obtained from the correlation engine. The trigger correlation coefficient is larger than or equal to the predefined threshold correlation coefficient. By comparing or correlating the current image with the reference image the trigger correlation coefficient is a particular correlation coefficient that is obtained or derived by the correlation engine for a displacement between the current image and the reference image at which the correlation coefficient is larger than or equal to the predefined threshold correlation coefficient for the first time. Accordingly, and with a given current image and a reference image and when deriving a correlation coefficient for numerous relative displacements between the current image and the reference image the trigger correlation coefficient correlates or corresponds to a displacement between the current image and the reference image at which the correlation coefficient is larger than or equal to the predefined threshold correlation coefficient for the first time.

In response of obtaining the trigger correlation coefficient and/or in response of obtaining a correlation coefficient being larger than or equal to the predefined threshold correlation coefficient for the first time, the search engine will switch from the preliminary search mode into the accurate search mode. Accordingly, the trigger correlation coefficient and hence any subsequent correlation coefficient obtained from subsequent correlation of the current image with the reference image for further displacement will be stored in the storage.

According to another example and when the search engine is in the accurate search mode the correlation engine is one of controllable or operable to provide a neighboring correlation coefficient resulting from a displacement between the reference image of the current image with a displacement offset of one pixel compared to the displacement between the reference image and the current image that the leads to the generation of the trigger correlation coefficient. Hence, when switched into the accurate search mode the correlation engine is controlled or operable to conduct a correlation or comparison of neighboring displacements of the current image and the reference image, which neighboring displacements and are displacements with an offset of one pixel in either direction compared to a displacement that correlates to the trigger correlation coefficient. Accordingly, and with some examples and after being switched into the accurate search mode the neighboring displacement is a displacement with a distance or offset of x+1 or x-1 pixel. A subsequent displacement may be a displacement of y+1 paired with x=0, x+1 and/or x-1. A further subsequent displacement may be a displacement of y-1 paired with a displacement of with x=0, x+1 and/or x-1.

Accordingly, and when switched into the accurate search mode the correlation engine is controlled or operable to conduct neighboring displacements that are in direct vicinity to the displacement that triggered or that led to the generation of the trigger correlation coefficient. There will be then a pixelwise displacement around the trigger displacement that led to the trigger correlation coefficient. For each one of the 8 surrounding displacements there will be derived a respective neighboring correlation coefficient, which will be stored in the storage.

According to a further example and when in the accurate search mode the search engine is configured to control the correlation engine to provide neighboring correlation coefficients of immediate neighboring displacements between the reference image and the current image, which immediate neighboring displacements are immediately adjacent to the displacement between the reference image and the current image that leads to the generation of the trigger correlation coefficient.

Accordingly, and only when in the accurate search mode, the correlation coefficient resulting from a correlation of the current image with the reference image at a given displacement between the current image and the reference image will be stored. Moreover, for all eight immediate surrounding displacements of the trigger displacement, which trigger displacement led to the trigger correlation coefficient, respective immediate neighboring correlation coefficients will be derived and stored in the storage.

According to a further example and when in the accurate search mode the search engine is configured to store the neighboring correlation coefficients in the storage. The neighboring correlation coefficients being obtainable from the correlation engine and are generated on the basis of immediate neighboring displacements between the reference image and the current image, which immediate neighboring displacements are located immediately adjacent to the displacement between the reference image and the current image that led to the generation of the trigger correlation coefficient.

By only storing the immediate neighboring correlation coefficients, which are derived from immediate neighboring displacements of the current image and the reference image based on the trigger displacement, there can only be derived and stored a limited amount of correlation coefficients, which, as will be shown below, will be sufficient to obtain a displacement information between the current image and the reference image.

According to another example of the electronic circuit and when in the accurate search mode the search engine is further configured to store next neighboring correlation coefficients in the storage. The next neighboring correlation coefficient are obtainable from the correlation engine. The next neighboring correlation coefficients are generated on the basis next immediate neighboring placements between the reference image and the current image, which immediate neighboring displacement distinguish by a two-pixel distance from the displacement between the reference image and the current image that leads to the generation of the trigger correlation coefficient.

By way of example and when starting from the trigger displacement, which correlates to the generation of the trigger correlation coefficient the next immediate neighboring displacements are such displacements with a displacement of +/- 2 pixel in y-direction and in x-direction. In this way there can be provided and derived fourteen next neighboring displacements, which are located radially outside and directly adjacent to the neighboring displacements of the trigger displacement.

Also, the correlation coefficients obtainable or obtained on the basis of the next immediate neighboring displacement are stored in the storage.

In this way, a maximum storage capacity of the storage may be limited to store the trigger correlation coefficient, 8 neighboring correlation coefficients and 14 next neighboring correlation coefficients.

According to a further example the processor is triggered to read at least a set of at least one of the neighboring correlation coefficients and the next neighboring correlation coefficients from the storage. Optionally, the processor may be operable to interpolate a maximum correlation coefficient on the basis of the trigger correlation coefficient and the immediate neighboring correlation coefficients and the next neighboring correlation coefficients. An interpolation of a maximum correlation coefficient on the basis of the trigger correlation coefficient and at least one set of the neighboring correlation coefficients and the next neighboring correlation coefficient may provide a sub-pixel distance determination.

According to another example the processor is further operable to compare the neighboring and/or next neighboring correlation coefficients and to determine a maximum neighboring correlation coefficient on the basis of which a displacement information between the reference image and the current image can be derived. The threshold correlation coefficient is typically selected or determined such, that one of the immediate neighboring correlation corporations of the trigger correlation coefficient is the maximum correlation coefficient of all available correlation coefficients.

In this way and by switching the search engine from the preliminary search mode into the accurate search mode, which switching is triggered by detecting a first trigger correlation coefficient being larger than or equal to the predefined threshold correlation coefficient, the search for the maximum correlation coefficient can be accelerated. The entire procedure of finding a maximum correlation coefficient of a number of available displacements between the current image and the reference image can be accelerated. The respective routine of determining or measuring a motion or displacement between the current image and the reference image can be thus improved.

According to another aspect the present disclosure also relates to a method of optical motion sensing on the basis of the comparison between a reference image and a current image obtainable by an image acquisition unit of an optical motion sensing device. The method comprises the steps of storing of the reference image and the current image, determining a correlation coefficient between the reference image and the current image for each one of numerous displacements between the reference image and the current image.

The method further comprises the steps of comparing the correlation coefficients between the reference image and the current image for each one of the numerous displacements with a predefined threshold correlation coefficient. The method further comprises the step of storing the correlation coefficient in a storage only when the correlation coefficient is larger than or equal to the predefined threshold correlation coefficient. According to some examples the method is executed by an electronic circuit for an optical motion sensing device as described above. Insofar, all features, effects and benefits as described above in connection with the electronic circuit may equally apply to the method of optical motion sensing; and vice versa.

According to a further example the comparison of the correlation coefficients between the reference image and the current image for each one of the numerous displacements may be conducted by default in a so-called preliminary search mode. The comparison may reveal if the respective correlation coefficient is larger than or equal to the predefined threshold correlation coefficient. If the correlation coefficient for a given displacement between the current image and the reference image is larger than the predefined threshold correlation coefficient the search may be switched into an accurate search mode. When in the accurate search mode, the displacement between the current image and the reference image may be switched to obtain correlation coefficients that reflect an immediate neighboring displacement, i.e., a displacement that immediately surrounds a trigger displacement, which led to the generation of the trigger correlation coefficient, which is the first correlation coefficient, which is larger than or equal the predefined threshold correlation coefficient.

According to a further example the method comprises the step of determining or deriving numerous neighboring correlation coefficients between the reference image and the current image on the basis of numerous displacements between the reference image and the current image with a displacement or offset of one pixel compared to the displacement between the reference image and the current image that leads to the generation of a trigger correlation coefficient. The trigger correlation coefficient is a first correlation coefficient, which is larger than or equal than the predefined threshold correlation coefficient. In this way the detection of a trigger correlation coefficient, being the first correlation coefficient being larger than or equal than the predefined threshold correlation coefficient may change the way the current image is compared or correlated to the reference image.

Hence, detection of the trigger correlation coefficient triggers the further analysis of the current image and the reference image in accordance to the accurate search mode. In a further example the method further comprises the step of storing the neighboring correlation coefficient in a storage. Specifically, the correlation coefficients are only stored in the storage when the method conducts the accurate search mode, i.e., after having been triggered or switched into the accurate search mode upon or in response to the detection of the trigger correlation coefficient.

According to another example, the method comprises the steps of determination a maximum neighboring correlation coefficient of the numerous neighboring correlation coefficients and deriving a displacement information between the reference image and the current image on the basis of the maximum neighboring correlation coefficient. The maximum correlation coefficient of all available correlation coefficients reflects the distance or displacement information between the current image and the reference image, which have been captured at different positions of the motion sensing device relative to a reference surface.

In another aspect the present invention further relates to a computer program product comprising a non-transitory computer readable storage medium. The storage medium comprises computer readable instructions executable by an electronic circuit as described above. Specifically, the computer readable instructions are executable or conductible by the processor of the electronic circuit as described above. The computer readable instructions cause the electronic circuit, e.g., the processor thereof, to execute the method as described above. Insofar, all features, effects and benefits as described above in connection with at least one of the electronic circuit and the method of optical motion sensing may equally apply to the computer program; and vice versa.

### Brief description of the drawings

In the following an example of the invention will be described in greater detail by making reference to the drawings, in which:
- Fig. 1 is a block diagram of the electronic circuit for optical motion detection
- Fig. 2 shows an example of a two-dimensional image with an array of pixels, and
- Fig. 3 is a flowchart of a method of optical motion detection.

### Detailed description of the invention

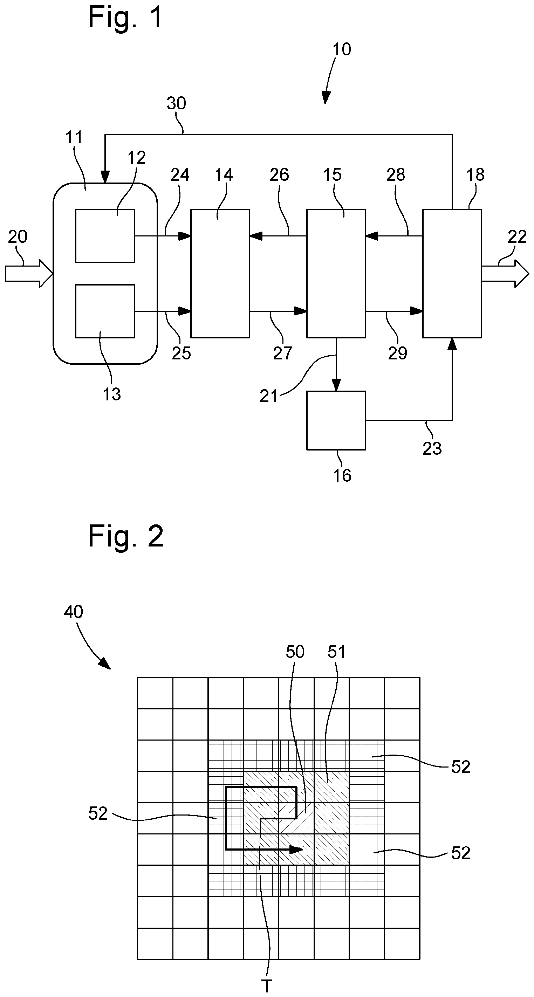

In Fig. 1 there is illustrated an example of an optical motion sensing device 1. The sensing device 1 comprises an electronic circuit 10. The electronic circuit 10 comprises an image acquisition unit 11. The image acquisition unit 11 is configured to receive image data, e.g., obtained from an optical acquisition device (not illustrated) or image input 20, e.g., from an array of light sensitive elements or pixels. The image input 20 is to be stored as a reference image 12. Subsequent image input 20 is configured to be stored as a current image 13. The image acquisition unit 11 is coupled to a correlation engine 14. Here, the reference image 12 is transferable by a signal line to the correlation engine 14. The current image 13 is transferable via another signal line 25 to the correlation engine 14.

The correlation engine 14 is further connected to a search engine 15. Here, there is provided a signal line 27 by way of which correlation coefficients derived or derivable by the correlation engine 14 can be transferred to the search engine 15. The search engine 15 is connected to the correlation engine 14 via another signal line 26. Via the signal line 26 the search engine 15 may be operable to control or to provide feedback to the correlation engine 14.

The electronic circuit 10 further comprises a storage 16, e.g., implemented as an electronic storage. The storage 16 connected to a CPU or processor 18 via a signal line 23. Moreover, the processor 18 is connected to the search engine 15 via a signal line 28. The search engine 15 is connected to the processor 18 via another signal line 29. Moreover, the processor 18 may be connected to the image acquisition unit 11 via a control line 30. An output 22 of the processor 18 is configured to provide displacement information, which may be even of sub-pixel precision.

The correlation engine 14 is configured to conduct a displacement between the current image 13 and the reference image 12 along the x- and y coordinates. For each displacement the correlation engine 14 is configured to derive a correlation coefficient. The correlation coefficient is then transmitted via the signal line 27 to the search engine 15. The search engine 15 conducts a preliminary search. During the preliminary search and while in the preliminary search mode the search engine 15 is operable to compare the correlation coefficient received from the correlation engine 14 with a predefined reference correlation coefficient.

If the comparison reveals that the current correlation coefficient is smaller than the reference correlation coefficient the search engine 15 induces or triggers a further displacement between the current image 13 and the reference image 12. Consequently, there will be then provided another correlation coefficient, which will be again compared with the predefined reference correlation coefficient. This procedure will be repeated multiple times until the search engine 15 detects or obtains a correlation coefficient which is larger than or equal the predefined threshold correlation coefficient.

In response to detect such a trigger correlation coefficient the search engine 15 switches into the accurate search mode. Upon switching into the accurate search mode, the search engine 15 is operable to store a correlation coefficient in the storage 16. Moreover, the search engine 15 starts to initiate or to control a further displacement of the reference image 12 relative to the current image 13 by one pixel, e.g. in +/y- x-direction and/or +/y-direction. Specifically and in response to the detection of the trigger correlation coefficient there will be conducted a well-defined displacement routine in order to obtain correlation coefficients for the immediate surrounding displacements of the trigger displacement. In this way and starting from the trigger displacement there can be obtained correlation coefficients of the displacement that are immediate neighbors of the trigger displacement. All correlation coefficients obtained from neighboring displacements, i.e. displacements by one pixel in the transverse direction, will be stored in the storage 16. The processor 18 may be then configured to read the stored correlation coefficients. The processor 18 may be further configured to mutually compare the size of the stored correlation coefficients and to determine a maximum correlation coefficient. The maximum correlation coefficient may represent the transverse displacement and direction and hence the direction and magnitude of a displacement between the current image and the reference image, which is directly indicative of the displacement between the optical motion sensing device and a reference surface.

In Fig. 2 there is illustrated one example of a pixel array 40. Here, a pixel 50 may represent a displacement and hence a displacement correlation, which is indicative of a transverse displacement of the first direction (x-direction) and the second direction (y-direction) between the current image 13 and a reference image 12. When starting to conduct numerous displacements between the current image 13 and the reference image 12 the correlation coefficient resulting from a displacement 51 as indicated by the pixels 51 may be larger than or equal the predefined threshold correlation coefficient. Hence, and with a displacement, that relates to a particular pixel T, which corresponds to a displacement with a correlation coefficient 51 the search engine 15 may switch from the preliminary and default search mode into the accurate search mode.

In subsequent steps and when starting with the displacement configuration according to pixel T the search engine 15 may conduct a subsequent displacement as indicated by the arrow 60. Respective correlation coefficients 51, 50, 51, 51, 52, 52, 52, 51 may be then revealed and stored in the storage 16.

Among these correlation coefficients the correlation coefficient 50 may be identified as a maximum correlation coefficient and may thus reflect the spatial offset between the current image 13 and the reference image 12.

Moreover, the search engine 15 may be also configured to initiate next neighboring displacements between the reference image 12 and the current image 13, which next neighboring displacements include numerous displacements of two pixels in the two transverse directions x and y. When starting from the displacement as indicated by pixel 50 comprising a maximum correlation coefficient the next neighboring pixels, i.e., the 8 immediately surrounding pixel 51 typically comprise a slightly smaller correlation coefficient, which is still larger than the predefined threshold correlation coefficient.

It is also of particular benefit not to only obtain the immediate neighboring displacement correlation coefficients 51 but to also obtain the next neighboring displacement correlation coefficients 52. The immediate neighboring correlation coefficients 51 and the next neighboring correlation coefficients 52 may be all stored in the storage 16 for further signal analysis or correlation coefficient analysis. The immediate neighboring correlation coefficients 51 as well as the next neighboring correlation coefficients 52 may be used for a maximum correlation interpolation, which allows to obtain displacement information of sub-pixel precision.

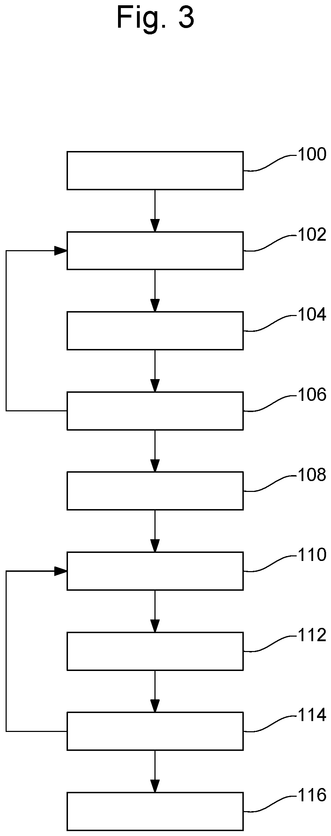

In the flowchart according to Fig. 3 the method of optical motion sensing to be conducted by the electronic circuit 10 or by an optical motion sensing device 1 as described above is schematically illustrated. In a first step 100 the reference image 12 and the current image 13 are stored, e.g. in the respective storage spaces of the image acquisition unit 11. In step 102 there is determined a correlation coefficient between the reference image 12 and the current image 13 for a given displacement between the reference image 12 and the current image 13. In step 104 correlation coefficient is compared with the predefined threshold correlation coefficient. In step 106 the result of the comparison is further evaluated. If the comparison reveals that the correlation coefficient is smaller than the predefined threshold correlation coefficient the method returns to step 102, where another correlation coefficient between the reference image onto current image is derived on the basis of another displacement.

If in step 106 it is revealed that the correlation coefficient is larger than or equal to the predefined threshold correlation coefficient the respective correlation coefficient is stored in the storage 16. In a subsequent 108 the search engine 15 is switched from the default preliminary search mode into the accurate search mode. Accordingly, and in step 110 the current image 13 is displaced relative to the reference image 12 to an immediate neighboring displacement. In step 112, a respective correlation coefficient is derived in. Also this correlation coefficient is stored in step 114 in the storage 16 and the method returns to step 110 to obtain another correlation coefficient for a further predefined immediate neighboring displacement. The loop of steps 110, 112, 114 is continued until all immediate neighboring correlation coefficients have been obtained and/or stored in the storage 12. In step 116 the processor 18 may be conducted or may be operable to determine a maximum correlation coefficient of all correlation coefficients that have been stored in the storage 16. The so obtained maximum correlation coefficient may directly reflect the displacement between the current image and the reference image. This displacement is indicative of the movement of the optical motion sensing device 1 relative to the reference surface. Operating the search engine 15 and switching of the search engine 15 from the preliminary search mode into the accurate search mode has many advantages.

In average, the preliminary search requires to calculate only half of the correlation coefficients compared to prior art solution. The coefficients stored in the memory are reduced to only those surrounding the maximum correlation coefficient or those surrounding the trigger correlation coefficient. This allows for a reduction of power requirements and a reduction of time required to find the maximum correlation coefficient. Accordingly, the storage capacity required for storing correlation coefficients can be reduced. Also, the space required for storing correlation coefficients may be only required for a distance calculation of sub-pixel precision, namely when conducting an interpolation of correlation coefficients stored in the storage.

For finding or retrieving the maximum correlation coefficient it may be sufficient to keep track of a maximum correlation coefficient and hence to compare a momentarily obtained correlation coefficient with further correlation coefficients during the stage of accurate search. For finding of the maximum correlation coefficient, it may be only required to store only one correlation coefficient, which is larger than a preceding correlation coefficient when in the accurate search mode. Each correlation coefficient being smaller than or equal to a previously obtained correlation coefficient may be discarded. After conducting a displacement of the current image relative to the reference element in accordance to all neighboring displacements based on the trigger displacement, the maximum correlation coefficient may reveal automatically when only storing a correlation coefficient being larger than a preceding correlation coefficient during the stage of accurate search.

### Nomenclature

- 10: electronic circuit
- 11: image acquisition
- 12: reference image
- 13: current image
- 14: correlation engine
- 15: search engine
- 16: storage
- 18: CPU
- 20: input
- 21: signal line
- 22: output
- 23: signal line
- 24: signal line
- 25: signal line
- 26: signal line
- 27: signal line
- 28: signal line
- 29: signal line
- 30: control line
- 40: pixel array
- 50: pixel
- 51: pixel
- 52: pixel

## Claims

1. An electronic circuit (10) for an optical motion sensing device (1), the electronic circuit comprising (10):
- a processor (18) and a storage (16),
- an image acquisition unit (11) configured to store a reference image (12) and a current image (13) to be compared with the reference image (12),
- a correlation engine (14) connected to the image acquisition unit (11) and configured to determine a correlation coefficient between the reference image (12) and the current image (13) for each one of numerous displacements between the reference image (12) and the current image (13),
- a search engine (15) connected to the correlation engine (14) and operable to compare the correlation coefficient of each displacement between the reference image (12) and the current image (13) with a predefined threshold correlation coefficient,
- wherein the search engine (15) is operable in one of a preliminary search mode and an accurate search mode, wherein when in the accurate search mode, the search engine (15) is configured to store the correlation coefficient obtained from the correlation engine in the storage (16).

2. The electronic circuit (10) according to claim 1, wherein when in the preliminary search mode, the search engine (15) is inoperable to store the correlation coefficient obtained from the correlation engine (14) in the storage (16).

3. The electronic circuit (10) according to any one of the preceding claims, wherein the search engine (15) is in the preliminary search mode per default.

4. The electronic circuit (10) according to any one of the preceding claims, wherein the search engine (15) is switchable from the preliminary search mode into the accurate search mode in response to a detection of a trigger correlation coefficient obtained from the correlation engine (14), which trigger correlation coefficient is larger than or equal to the predefined threshold correlation coefficient.

5. The electronic circuit (10) according to claim 4, wherein when the search engine (15) is in the accurate search mode, the correlation engine (14) is one of controllable or operable to provide a neighboring correlation coefficient resulting from a displacement between the reference image (12) and the current image (13) with a displacement offset of one pixel compared to the displacement between the reference image (12) and current image (13) that leads to the generation of the trigger correlation coefficient.

6. The electronic circuit (10) according to claim 5, wherein when in the accurate search mode, the search engine (15) is configured to control the correlation engine (14) to provide neighboring correlation coefficients of immediate neighboring displacements between the reference image (12) and the current image (13), which immediate neighboring displacements are immediately adjacent to the displacement between the reference image (12) and the current image (13) that leads to the generation of the trigger correlation coefficient.

7. The electronic circuit (10) according to claim 5 or 6, wherein when in the accurate search mode, the search engine (15) is configured to store the neighboring correlation coefficients in the storage (16), the neighboring correlation coefficients being obtainable from the correlation engine (14) and being generated on the basis of immediate neighboring displacements between the reference image (12) and the current image, (13) which immediate neighboring displacements are immediately adjacent to the displacement between the reference image (12) and the current image (13) that leads to the generation of the trigger correlation coefficient.

8. The electronic circuit (10) according to claim 7, wherein when in the accurate search mode, the search engine (15) is configured to store next neighboring correlation coefficients in the storage (16), the next neighboring correlation coefficients being obtainable from the correlation engine (14) and being generated on the basis of next immediate neighboring displacements between the reference image (12) and the current image (13) which next immediate neighboring displacements distinguish by an at least two pixel distance from the displacement between the reference image (12) and the current image (13) that leads to the generation of the trigger correlation coefficient.

9. The electronic circuit (10) according to claim 7 or 8, wherein the processor (18) configured to read at least a set of at least one of the neighboring correlation coefficients and the next neighboring correlation coefficients from the storage (16) and to interpolate a maximum correlation coefficient on the basis of the trigger correlation coefficient and at least one set of the neighboring correlation coefficients and the next neighboring correlation coefficients.

10. The electronic circuit (10) according to any one of the preceding claims 5-9, wherein the processor (18) is operable to compare the neighboring correlation coefficients and to determine a maximum neighboring correlation coefficient on the basis of which a displacement information between the reference image (12) and the current image (13) is derivable.

11. A method of optical motion sensing on the basis of a comparison between a reference image (12) and a current image (13) obtainable by an image acquisition unit (11) of an optical motion sensing device (1) the method comprising the steps of:
- storing of the reference image (12) and the current image (13),
- determining a correlation coefficient between the reference image (12) and the current image (13) for each one of numerous displacements between the reference image (12) and the current image (13),
- comparing the correlation coefficients between the reference image (12) and the current image (13) for each one of the numerous displacements with a predefined threshold correlation coefficient, and
- storing the correlation coefficient in a storage (16) only when the correlation coefficient is larger than or equal to the predefined threshold correlation coefficient.

12. The method according to claim 11, further comprising the step of determining or deriving numerous neighboring correlation coefficients between the reference image (12) and the current image (13) on the basis of numerous displacements between the reference image (12) and the current image (13) with a displacement offset of at least one pixel compared to the displacement between the reference image (12) and the current image (13) that leads to the generation of a trigger correlation coefficient, which trigger correlation coefficient is a first correlation coefficient being larger than or equal than the predefined threshold correlation coefficient.

13. The method according to claim 12, further comprising the step of storing the neighboring correlation coefficients in a storage (16).

14. The method according to claim 12 or 13, further comprising the steps of determining a maximum neighboring correlation coefficient of the numerous neighboring correlation coefficients and deriving a displacement information between the reference image (12) and the current image (13) on the basis of the maximum neighboring correlation coefficient.

15. A computer program product comprising a non-transitory computer readable storage medium having computer readable instructions that are executable by an electronic circuit (10) according to any one of the preceding claims 1-10, which computer readable instructions cause the electronic circuit (10) to execute the method according to any one of the preceding claims 11 to 14.
